# EUROPEAN PATENT SPECIFICATION

(11) **EP 2 676 540 B1**
(45) Date of publication and mention of the grant of the patent: **09.08.2017**
(21) Application number: 13172608.5
(22) Date of filing: 19.06.2013
(51) Int. Cl.: A01G 9/14

(54) **Greenhouse**
Gewächshaus
Serre

(30) Priority: 21.06.2012 NL 2009047
(43) Date of publication of application: 25.12.2013
(73) Proprietor: Beheer 141 B.V., 2681 TW Monster (NL)
(72) Inventor: Arensman, Ronnie, 2681 TW Monster (NL)
(74) Representative: Hooiveld, Arjen Jan Winfried

(56) References cited:
- EP-A1- 1 474 967
- EP-A1- 2 165 596
- GB-A- 2 294 965
- NL-A- 8 902 603
- US-A- 3 981 118

## Description

The invention relates to a (Dutch-type) greenhouse comprising at least one gutter section and a roof extending from said gutter section, which roof comprises a ridge section as well as spaced-apart glazing bars which are connected to an edge of the gutter section near one end and to the ridge section near the other end, whilst panes are provided between adjacent glazing bars, which panes are supported in rebates in the glazing bars, in a rebate in the gutter section and between two flanges arranged one above the other of the ridge section.

The invention also relates to a method for constructing the greenhouse.

It is noted that in practice the term "greenhouse" is generally used for an agricultural and/or horticultural greenhouse suitable for cultivating vegetables, fruit or flowers and the like.

Such a greenhouse is generally known and described in particular in Dutch patent publication No. 89.02603 (P.L.J. Bom Beheer B.V.). The greenhouse discussed therein is built up of columns, gutters of tubular cross-section supported by said columns, and of a sloping roof consisting of a ridge section, glazing bars and panes, which roof extends between two gutters. Said gutters and said glazing bars form structural elements which are to take up the weight of the roof plus any wind and snow loads. EP 1 474 967 A1 discloses a similar greenhouse. A general drawback of a greenhouse of the type as referred to in the introduction, among which the greenhouse that is known from the aforesaid Dutch patent specification, is the following. In practice it has become apparent that breaking panes may lead to perilous situations, both during the installation of the panes (the so-called "glazing") and during use of such a greenhouse: falling, sharp and heavy pane fragments may cause critical or even mortal injury to personnel working in the greenhouse. To reduce said risks to a certain extent, panes of hardened glass are often used, but the risk of pane breakage is not excluded in such a case, with all its adverse consequences. So far a solution to the problem of pane breakage has not been found.

The object of the invention is to obviate the above drawback of the prior art, more particularly to provide a greenhouse in which the risk of pane breakage (during said glazing and during use of the greenhouse) has been reduced to acceptable proportions, and wherein an airtight and/or watertight structure is provided.

In order to achieve that object, a greenhouse of the kind referred to in the introduction is according to the invention characterised in that a pressure-distributing element is provided between the flanges of the ridge section, at least substantially in abutment with said flanges and with a web of the ridge section that interconnects the flanges, wherein the pressure-distributing element comprises at least one spring tongue which extends inward from a part of the pressure-distributing element that abuts against one of the flanges. The pressure-distributing element in particular comprises at least two spring tongues, wherein the first tongue extends inward from a part of the pressure-distributing element that abuts against the upper flange, and wherein the second tongue extends inward from a part of the pressure-distributing element that abuts against the lower flange. In such a case the first tongue extends from an upper leg of the pressure-distributing element in the direction of the web of the ridge section that interconnects the flanges. The second tongue in that case extends from a lower leg of the pressure-distributing element in the direction of said web of the ridge section.

The pressure-distributing element functions as a support surface for the pane so as to locally distribute the weight thereof in such a manner that no point loads will occur in the pane at that location, not only during installation of the panes but also, for example, when the panes are being cleaned manually or mechanically after some time. Extensive tests have shown that the risk of pane breakage has thus been virtually excluded, as a result of which it has in particular become readily possible to insure the present greenhouse at low cost. The pressure-distributing element furthermore prevents the panes from being "sucked up" by heavy winds.

The spring tongues form inwardly directed barbs, with the first tongue, which extends from the upper flange, in particular providing a watertight seal between the ridge section and the panes placed between the flanges thereof. Cleaning the panes either mechanically or manually with a fluid, the so-called "deck washing", can then take place without the fluid partially finding its way into the greenhouse via the ridge section. The second tongue, which extends from the lower flange, forms (part of) the support surface for the panes and in particular provides an airtight seal between the ridge section and the panes placed between the flanges thereof.

It is noted that in a preferred variant the flanges slope down in parallel relationship from the web of the ridge section. It is further noted that the invention is not limited to panes made of hardened glass, but that the invention also extends to panes of other (transparent) materials, such as common glass, plastic and the like. In the light of the risk of pane breakage it is preferable, however, to use panes made of hardened glass, in particular also because hardened glass cannot damage the spring tongue(s).

The pressure-distributing element is at least substantially entirely retained between the flanges of the ridge section, so that the influence of UV radiation on the pressure-distributing element is quite limited.

In a preferred embodiment of a greenhouse according to the invention, the pressure-distributing element is snap-fitted between the flanges of the ridge section.

In another preferred embodiment of a greenhouse according to the invention, the pressure-distributing element is at least substantially C-shaped, seen in cross-sectional view. In another preferred variant, the pressure-distributing element is at least substantially W-shaped, seen in cross-sectional view. This makes it possible to compensate for an oblique position of the steel structure of the present greenhouse caused by temperature fluctuations (blazing sun during the day, cold during the night) so as to prevent panes breaking or falling out, since the W-shape ensures that said compensation is taken up in a "harmonica-like" manner by compression thereof. In this way a "rattle-free", adequate support of the panes in the rebates is ensured.

In another preferred embodiment of a greenhouse according to the invention, the pressure-distributing element is plastically or elastically deformable. In a preferred variant comprising an elastically deformable pressure element, the legs and the tongue(s) can return to their starting position (i.e. the position prior to the placement of the pane) after deformation (i.e. after the pane has been placed), whereas this is not possible in the case of plastic deformation.

In another preferred embodiment of a greenhouse according to the invention, the pressure-distributing element is at least substantially made of a material having thermal insulation properties. The thermally insulating pressure-distributing element prevents the formation of thermal bridges at the location of the rebates. Preferably, the pressure-distributing element is also at least substantially made of a material having water-sealing properties. In that case the pressure-distributing element will function as a seal, therefore, to prevent (rain) water and dirt from outside finding their way into the greenhouse past the panes.

In another preferred embodiment of a greenhouse according to the invention, the pressure-distributing element is at least substantially made of a material having sound insulation properties. In this way a low-noise roof construction is obtained.

In another preferred embodiment of a greenhouse according to the invention, the pressure-distributing element is at least substantially made up of a rubber section, which is preferably non-shrinkable.

In another preferred embodiment of a greenhouse according to the invention, the pressure-distributing element is capable of deformation from a non-loaded position, in which a pane can be placed between the legs and the spring tongue(s) of the pressure-distributing element, to a loaded position, in which the legs and the spring tongue(s) of the pressure-distributing element are pressed against the pane.

The invention also relates to a pressure-distributing element which is suitable as such for use in a greenhouse according to the invention.

As already said before, the invention also relates to a method for constructing a greenhouse according to the invention, wherein a roof extending from at least one gutter section is built up from a ridge section and spaced-apart glazing bars, wherein the glazing bars are connected to an edge of the gutter section near one end and to the ridge section near the other end, and wherein panes are received between adjacent glazing bars, being supported in rebates in the glazing bars and in a rebate in the gutter section, characterised in that a pressure-distributing element is provided between the flanges of the ridge section, wherein the pressure-distributing element at least substantially abuts against said flanges and against a web of the ridge section that interconnects the flanges, and wherein the pressure-distributing element comprises at least one spring tongue which extends inward from a part of the pressure-distributing element that abuts against one of the flanges. The invention will now be explained in more detail with reference to figures illustrated in a drawing, in which
- Figure 1 is a schematic, perspective view of a part of the roof of a greenhouse according to the invention;
- Figure 2 is a cross-sectional view of a ridge section used in figure 1.

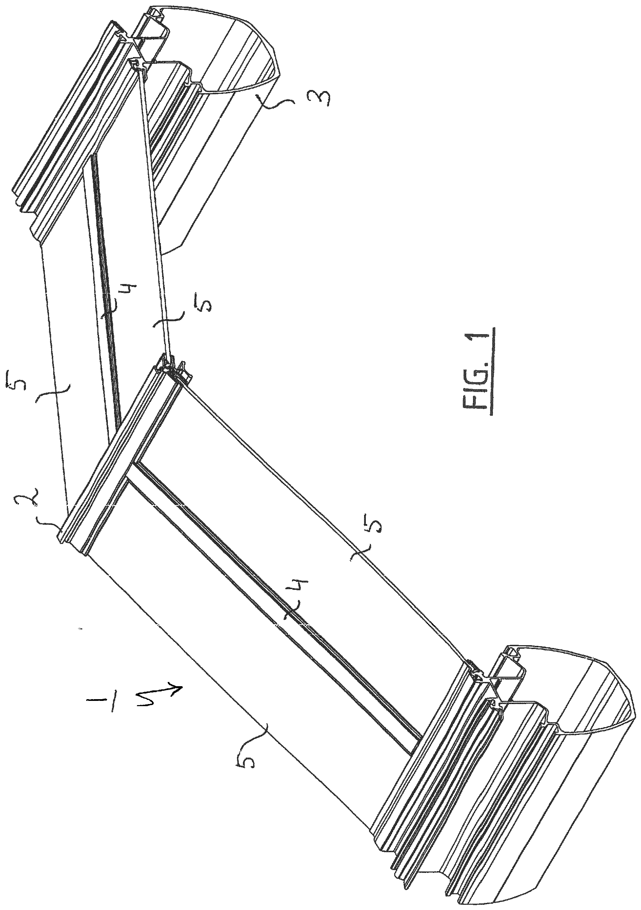

Figure 1 shows an agricultural or horticultural greenhouse, an inclined roof 1 of which is built up of a ridge section 2 extending in the longitudinal direction of the greenhouse and glazing bars 4 mounted on either side of the ridge section 1, which glazing bars are supported on gutter sections 3. The gutter sections 3 have a tubular cross-section and are in turn supported on columns (not shown). Panes 5 of hardened glass are mounted between adjacent glazing bars 4, and that in such a manner that said panes 5 are supported in lateral rebates in the glazing bars 4, between upper flanges and lower flanges of the ridge section 2, and in lateral rebates 6 in the gutter sections 3.

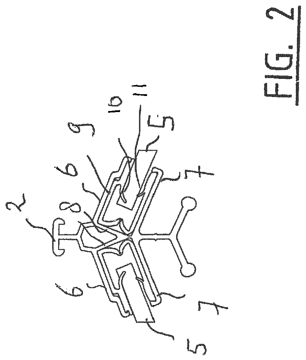

With reference to figure 2, the upper and lower flanges 6, 7 are connected to a web 8 of the ridge section 2 at a downwardly inclined angle. The flanges 6, 7 and the web 8 of the ridge section 2 are lined with a one-piece rubber section 9 of W-shaped cross-section. The rubber section 9 is provided with two spring tongues 10, 11. The first tongue 10 extends inward from a part of the rubber section 9 that abuts against the upper flange 6 (i.e. the upper leg of the rubber section 9). The second tongue 11 also extends inward from a part of the rubber section that abuts against the lower flange 7 (i.e. the lower leg of the rubber section).

The rubber section 9 primarily functions as a pressure-distributing support surface for the panes 5, but it also functions to seal the panes 5 against air, water and dirt, in particular by means of the tongues 10, 11. The rubber section 9 further functions as a thermal insulation element to prevent the formation of thermal bridges across parts of the ridge section 2. It will be understood that the rubber sections 9 provide a "rattle-free" support for the panes 5 between the flanges 6, 7.

It is noted that the invention is not limited to the embodiment shown herein, but that it also extends to other variants that fall within the scope of the appended claims.

## Claims

1. A greenhouse comprising at least one gutter section (3) and a roof (1) extending from said gutter section (3), which roof (1) comprises a ridge section (2) as well as spaced-apart glazing bars (4) which are connected to an edge of the gutter section (3) near one end and to the ridge section (2) near the other end, whilst panes (5) are provided between adjacent glazing bars (4), which panes (5) are supported in rebates in the glazing bars (4), in a rebate in the gutter section (3) and between two flanges (6, 7) arranged one above the other of the ridge section (2), **characterised in that** a pressure-distributing element (9) is provided between the flanges (6, 7) of the ridge section (2), at least substantially in abutment with said flanges (6, 7) and with a web (8) of the ridge section (2) that interconnects the flanges (6, 7), wherein the pressure-distributing element (9) comprises at least one spring tongue (10) which extends inward from a part of the pressure-distributing element (9) that abuts against one of the flanges (6, 7).

2. A greenhouse according to claim 1, wherein the pressure-distributing element (9) in particular comprises at least two spring tongues (10, 11), wherein the first tongue (10) extends inward from a part of the pressure-distributing element (9) that abuts against the upper flange (6), and wherein the second tongue (11) extends inward from a part of the pressure-distributing element (9) that abuts against the lower flange (7).

3. A greenhouse according to claim 1 or 2, wherein the pressure-distributing element (9) is snap-fitted between the flanges of the ridge section.

4. A greenhouse according to claim 1, 2 or 3, wherein the pressure-distributing element (9) is at least substantially C-shaped, seen in cross-sectional view.

5. A greenhouse according to claim 1, 2 or 3, wherein the pressure-distributing element (9) is at least substantially W-shaped, seen in cross-sectional view.

6. A greenhouse according to any one of the preceding claims 1 - 5, wherein the flanges (6, 7) slope down in parallel relationship from the web of the ridge section (2) .

7. A greenhouse according to any one of the preceding claims 1 - 6, wherein the pressure-distributing element (9) is elastically deformable.

8. A greenhouse according to any one of the preceding claims 1 - 7, wherein the pressure-distributing element (9) is plastically deformable.

9. A greenhouse according to any one of the preceding claims 1 - 8, wherein the pressure-distributing element (9) is at least substantially made of a material having thermal insulation properties.

10. A greenhouse according to any one of the preceding claims 1 - 9, wherein the pressure-distributing element (9) is at least substantially made of a material having sound insulation properties.

11. A greenhouse according to any one of the preceding claims 1 - 10, wherein the pressure-distributing element (9) is at least substantially made of a material having water-sealing properties.

12. A greenhouse according to any one of the preceding claims 1 - 11, wherein the pressure-distributing element (9) is at least substantially made up of a rubber section.

13. A greenhouse according to any one of the preceding claims 1 - 12, wherein the pressure-distributing (9) element is capable of deformation from a non-loaded position, in which a pane can be placed between the legs and the spring tongue(s) (10, 11) of the pressure-distributing element (9), to a loaded position, in which the legs and the spring tongue(s) (10, 11) of the pressure-distributing element are pressed against the pane.

14. A pressure-distributing element (9) used in a greenhouse according to any one of the preceding claims 1 - 13 and being provided between the flanges (&, 7) of the ridge section (2), at least substantially in abutment with said flanges (6, 7) and with a web (8) of the ridge section (2) that interconnects the flanges (6, 7).

15. A method for constructing a greenhouse according to any one of the preceding claims 1 - 13, wherein a roof (1) extending from at least one gutter section (3) is built up from a ridge section (2) and spaced-apart glazing bars (4), wherein the glazing bars (4) are connected to an edge of the gutter section (3) near one end and to the ridge section (2) near the other end, and wherein panes (5) are received between adjacent glazing bars (4), being supported in rebates in the glazing bars (4) and in a rebate in the gutter section (3), **characterised in that** a pressure-distributing element (9) is provided between the flanges (6, 7) of the ridge section (2), wherein the pressure-distributing element (9) at least substantially abuts against said flanges (6, 7) and against a web (8) of the ridge section (2) that interconnects the flanges (6, 7), and wherein the pressure-distributing element (9) comprises at least one spring tongue (10) which extends inward from a part of the pressure-distributing element (9) that abuts against one of the flanges (6, 7).

## Patentansprüche

1. Gewächshaus, das wenigstens einen Rinnenabschnitt (3) und ein sich von dem Rinnenabschnitt (3) erstreckendes Dach (1) umfasst, wobei das Dach (1) einen Firstabschnitt (2) sowie beabstandete Verglasungsleisten (4) umfasst, die mit einem Rand des Rinnenabschnitts (3) nahe einem Ende und mit dem Firstabschnitt (2) nahe dem anderen Ende verbunden sind, wobei die Scheiben (5) zwischen benachbarten Verglasungsleisten (4) vorgesehen sind, wobei Scheiben (5) in den Falzen in den Verglasungsleisten (4), in einem Falz des Rinnenabschnitts (3) und zwischen zwei übereinander angeordneten Flanschen (6, 7) des Firstabschnitts (2) abgestützt sind, **dadurch gekennzeichnet, dass** ein Druckverteilungselement (9) zwischen den Flanschen (6, 7) des Firstabschnitts (2) vorgesehen ist, zumindest im Wesentlichen in Anlage mit den Flanschen (6, 7) und mit einem Steg (8) des Firstabschnitts (2), der die Flansche (6, 7) miteinander verbindet, wobei das Druckverteilungselement (9) wenigstens eine Federzunge (10) umfasst, die sich von einem Teil des Druckverteilungselements (9), das an einem der Flansche (6, 7) anliegt, nach innen erstreckt.

2. Gewächshaus nach Anspruch 1, wobei das Druckverteilungselement (9) insbesondere wenigstens zwei Federzungen (10, 11) umfasst, wobei sich die erste Zunge (10) von einem Teil des Druckverteilungselements (9), das an dem oberen Flansch (6) anliegt, nach innen erstreckt, und wobei sich die zweite Zunge (11) von einem Teil des Druckverteilungselements (9), das an dem unteren Flansch (7) anliegt, nach innen erstreckt.

3. Gewächshaus nach Anspruch 1 oder 2, wobei das Druckverteilungselement (9) zwischen den Flanschen des Firstabschnitts (2) eingerastet ist.

4. Gewächshaus nach Anspruch 1, 2 oder 3, wobei das Druckverteilungselement (9) im Querschnitt gesehen zumindest im Wesentlichen C - förmig ist.

5. Gewächshaus nach Anspruch 1, 2 oder 3, wobei das Druckverteilungselement (9) im Querschnitt gesehen zumindest im Wesentlichen W - förmig ist.

6. Gewächshaus nach einem der vorstehenden Ansprüche 1 - 5, wobei die Flansche (6, 7) von dem Steg des Firstabschnitts (2) in parallel zueinander abfallen.

7. Gewächshaus nach einem der vorstehenden Ansprüche 1 - 6, wobei das Druckverteilungselement (9) elastisch verformbar ist.

8. Gewächshaus nach einem der vorstehenden Ansprüche 1 - 7, wobei das Druckverteilungselement (9) plastisch verformbar ist.

9. Gewächshaus nach einem der vorstehenden Ansprüche 1 - 8, wobei das Druckverteilungselement (9) zumindest im Wesentlichen aus einem Material mit Wärmedämmeigenschaften hergestellt ist.

10. Gewächshaus nach einem der vorstehenden Ansprüche 1 - 9, wobei das Druckverteilungselement (9) zumindest im Wesentlichen aus einem Material mit Schalldämmeigenschaften hergestellt ist.

11. Gewächshaus nach einem der vorstehenden Ansprüche 1 - 10, wobei das Druckverteilungselement (9) zumindest im Wesentlichen aus einem Material mit Wasserabdichtungseigenschaften hergestellt ist.

12. Gewächshaus nach einem der vorstehenden Ansprüche 1 - 11, wobei das Druckverteilungselement (9) zumindest im Wesentlichen aus einem Gummiabschnitt zusammengesetzt ist.

13. Gewächshaus nach einem der vorstehenden Ansprüche 1 - 12, wobei das Druckverteilungselement (9) von einer entlasteten Position, in der eine Scheibe zwischen den Schenkeln und der/den Federzunge(n) (10,11) des Druckverteilungselements (9) platzierbar ist, in eine belastete Position, in der die Schenkel und die Federzunge(n) (10, 11) des Druckverteilungselements gegen die Scheibe gepresst sind, verformbar ist.

14. Druckverteilungselement (9), das bei einem Gewächshaus nach einem der vorstehenden Ansprüche 1 - 13 verwendet wird und das zwischen den Flanschen (6, 7) des Firstabschnitts (2), zumindest im Wesentlichen in Anlage mit den Flanschen (6, 7) und mit einem Steg (8) des Firstabschnitts (2), der die Flansche (6, 7) miteinander verbindet, vorgesehen ist.

15. Verfahren zur Konstruktion eines Gewächshauses nach einem der Ansprüche 1 - 13, wobei ein sich von wenigstens einem Rinnenabschnitt (3) erstreckendes Dach (1) aus einem Firstabschnitt (2) und beabstandeten Verglasungsleisten (4) aufgebaut wird, wobei die Verglasungsleisten (4) mit einem Rand des Rinnenabschnitts (3) nahe einem Ende und mit dem Firstabschnitt (2) nahe dem anderen Ende verbunden werden, und wobei Scheiben (5) zwischen benachbarten Verglasungsleisten (4) aufgenommen werden und in den Falzen der Verglasungsleisten (4) und in einem Falz des Rinnenabschnitts (3) abgestützt werden,
**dadurch gekennzeichnet, dass** ein Druckverteilungselement (9) zwischen den Flansches (6, 7) des Firstabschnitts (2) vorgesehen ist, wobei das Druckverteilungselement (9) zumindest im Wesentlichen an den Flanschen (6, 7) und an einem Steg (8) des Firstabschnitts (2), der die Flansche (6, 7) miteinander verbindet, anliegt, und wobei das Druckverteilungselement (9) wenigstens eine Federzunge (10) umfasst, die sich von einem Teil des Druckverteilungselements (9), das an einem der Flansche (6, 7) anliegt, nach innen erstreckt.

## Revendications

1. Serre comprenant au moins une section de gouttière (3) et un toit (1) s'étendant à partir de ladite section de gouttière (3), lequel toit (1) comprend une section de faîtage (2) ainsi que des barres de vitrage (4) espacées qui sont reliées à un bord de la section de gouttière (3) à proximité d'une première extrémité et à la section de faîtage (2) à proximité de l'autre extrémité, tandis que des vitres (5) sont agencées entre des barres de vitrage (4) adjacentes, lesquelles vitres (5) sont supportées dans des feuillures sur les barres de vitrage (4), dans une feuillure sur la section de gouttière (3) et entre deux brides (6, 7) agencées l'une au-dessus de l'autre de la section de faîtage (2), **caractérisée en ce qu'**un élément de répartition de pression (9) est agencé entre les brides (6, 7) de la section de faîtage (2), au moins sensiblement en butée avec lesdites brides (6, 7) et avec une bande (8) de la section de faîtage (2) qui relie ensemble les brides (6, 7), dans laquelle l'élément de répartition de pression (9) comprend au moins une languette élastique (10) qui s'étend vers l'intérieur à partir d'une partie de l'élément de répartition de pression (9) qui est en butée contre l'une des brides (6, 7).

2. Serre selon la revendication 1, dans laquelle l'élément de répartition de pression (9) comprend, en particulier, au moins deux languettes élastiques (10, 11), dans laquelle la première languette (10) s'étend vers l'intérieur à partir d'une partie de l'élément de répartition de pression (9) qui est en butée contre la bride supérieure (6), et dans laquelle la seconde languette (11) s'étend vers l'intérieur à partir d'une partie de l'élément de répartition de pression (9) qui est en butée contre la bride inférieure (7).

3. Serre selon la revendication 1 ou 2, dans laquelle l'élément de répartition de pression (9) est encliqueté entre les brides de la section de bord.

4. Serre selon la revendication 1, 2 ou 3, dans laquelle l'élément de répartition de pression (9) est au moins sensiblement en forme de C, suivant une vue en section transversale.

5. Serre selon la revendication 1, 2 ou 3, dans laquelle l'élément de répartition de pression (9) est au moins sensiblement en forme de W, vu en section transversale.

6. Serre selon l'une quelconque des revendications 1 à 5 précédentes, dans laquelle les brides (6, 7) sont inclinées vers le bas en relation parallèle à partir de la bande de la section de faîtage (2).

7. Serre selon l'une quelconque des revendications 1 à 6 précédentes, dans laquelle l'élément de répartition de pression (9) peut être déformé de manière élastique.

8. Serre selon l'une quelconque des revendications 1 à 7 précédentes, dans laquelle l'élément de répartition de pression (9) peut être déformé de manière plastique.

9. Serre selon l'une quelconque des revendications 1 à 8 précédentes, dans laquelle l'élément de répartition de pression (9) est réalisé au moins sensiblement à base d'un matériau présentant des propriétés d'isolation thermique.

10. Serre selon l'une quelconque des revendications 1 à 9 précédentes, dans laquelle l'élément de répartition de pression (9) est réalisé au moins sensiblement à base d'un matériau présentant des propriétés d'isolation phonique.

11. Serre selon l'une quelconque des revendications 1 à 10 précédentes, dans laquelle l'élément de répartition de pression (9) est réalisé au moins sensiblement à base d'un matériau présentant des propriétés d'étanchéité à l'eau.

12. Serre selon l'une quelconque des revendications 1 à 11 précédentes, dans laquelle l'élément de répartition de pression (9) est réalisé au moins sensiblement à partir d'une section en caoutchouc.

13. Serre selon l'une quelconque des revendications 1 à 12 précédentes, dans laquelle l'élément de répartition de pression (9) peut être déformé à partir d'une position non chargée, dans laquelle une vitre peut être placée entre les pattes et les languettes élastiques (10, 11) de l'élément de répartition de pression (9), vers une position chargée, dans laquelle les pattes et les languettes élastiques (10, 11) de l'élément de répartition de pression sont pressées contre la vitre.

14. Elément de répartition de pression (9) utilisé sur une serre selon l'une quelconque des revendications 1 à 13 précédentes et qui est agencé entre les brides (6, 7) de la section de faîtage (2), au moins sensiblement en butée avec lesdites brides (6, 7) et avec une bande (8) de la section de faîtage (2) qui relie les brides (6, 7) entre elles.

15. Procédé de construction d'une serre selon l'une quelconque des revendications 1 à 13 précédentes, dans lequel un toit (1) s'étendant à partir d'au moins une section de gouttière (3) est construit à partir d'une section de faîtage (2) et de barres de vitrage (4) espacées, dans lequel les barres de vitrage (4) sont reliées à un bord de la section de gouttière (3) à proximité d'une première extrémité et à la section de faîtage (2) à proximité de l'autre extrémité, et dans lequel les vitres (5) sont reçues entre les barres de vitrage adjacentes (4), étant supportées dans des feuillures sur les barres de vitrage (4) et dans une feuillure sur la section de gouttière (3),
**caractérisé en ce qu'**un élément de répartition de pression (9) est agencé entre les brides (6, 7) de la section de faîtage (2), dans lequel l'élément de répartition de pression (9) vient au moins sensiblement en butée contre lesdites brides (6, 7) et contre une bande (8) de la section de faîtage (2) qui relie les brides (6, 7) entre elles et dans lequel l'élément de répartition de pression (9) comprend au moins une languette élastique (10) qui s'étend vers l'intérieur à partir d'une partie de l'élément de répartition de pression (9) qui vient en butée contre l'une des brides (6, 7).
